# EUROPÄISCHE PATENTANMELDUNG

(11) **EP 4 235 533 A1**
(43) Veröffentlichungstag der Anmeldung: **30.08.2023**
(21) Anmeldenummer: 22158772.8
(22) Anmeldetag: 25.02.2022
(51) Int. Cl.: G06Q 10/04, G06Q 50/06

(54) **VERFAHREN ZUR BEWERTUNG EINES LASTPROFILS UND BESTIMMUNG VON SYSTEMPARAMETERN EINES ENERGIESYSTEMS**

(71) Anmelder: Siemens Aktiengesellschaft, 80333 München (DE)
(72) Erfinder: Metzger, Michael, 85570 Markt Schwaben (DE); Müller, Katrin, 10713 Berlin (DE); Niessen, Stefan, 91056 Erlangen (DE); Nikonov, Anton, 199178 Saint Petersburg (RU); Thiem, Sebastian, 91413 Neustadt an der Aisch (DE)
(74) Vertreter: Siemens Patent Attorneys

(57) **Zusammenfassung**

Die Erfindung verwendet eine Datenbank mit Datensätzen umfassend Lastprofile mit zugeordneten Metadaten. Für die Datensätze wird ein Bewertungsfaktor ermittelt. Es wird ein Datensatz ausgewählt anhand eines Vergleichs seiner Metadaten mit dem Anforderungsdaten und anhand seines Bewertungsfaktors, so dass ein ausreichend passender und ausreichend guter Datensatz ausgewählt wird. Mithilfe des ausgewählten Lastprofils können die Systemparameter des Energiesystems bestimmt werden.

## Beschreibung

Die Erfindung betrifft ein Verfahren zur Bestimmung von Systemparametern eines Energiesystems, bei dem eine Qualitätsbewertung eines Lastprofils vorgenommen wird.

Ein Energiesystem besteht aus einer oder mehreren Komponenten zur Bereitstellung von Energie, beispielsweise Strom, Wärme oder Kälte. In vielen Fällen fasst man auch die zugehörige Infrastruktur für Transport, Verteilung oder Speicherung dieser Energiearten unter diesen Begriff.

Für die Planung, Errichtung oder den Ausbau eines Energiesystems müssen Annahmen über die zukünftige Nutzung, insbesondere Lastanforderungen, und über technische, wirtschaftliche und andere Rahmenbedingungen gemacht werden, damit das Energiesystem einerseits den Anforderungen gerecht wird und andererseits nicht zu stark überdimensioniert und damit zu kostenintensiv ist. Beispiele für solche relevanten Daten sind Zeitreihen des Bedarfs an Energie (beispielsweise Strom, Heizung oder Kühlung), die erforderliche Zuverlässigkeit der Energieversorgung, Energiekosten und andere. Ausgehend von diesen Annahmen kann dann eine möglichst passende Auslegung des Energiesystems bestimmt werden, indem insbesondere die im Hinblick auf die Anforderungen richtigen Energiekomponenten ausgewählt und richtig dimensioniert werden. Mit anderen Worten, die Systemparameter des Energiesystems können dann für die vorgegebenen Anforderungen optimiert werden. Hierzu können mathematische Optimierungsverfahren eingesetzt werden.

Als Grundlage für die Annahmen stehen Lastprofile zur Verfügung. Unter einem Lastprofil versteht man den zeitlichen Verlauf der abgenommenen Leistung (beispielsweise Strom, Wärme oder Gas) über einen bestimmten Zeitraum. Derartige Lastprofile gibt es für unterschiedliche Verbraucher (beispielsweise Privathaushalte oder bestimmte Industriebetriebe oder -zweige), unterschiedliche Zeiträume (beispielsweise über einen Tag oder über ein Jahr) und in unterschiedlicher Auflösung (beispielsweise mit stündlicher oder monatlicher Granularität). Sie beruhen in der Regel auf Messungen, die in vielen Fällen durch Schätzungen ergänzt werden. Die Erstellung von Lastprofilen ist allerdings aufwändig, und sie sind nur sehr lückenhaft und mit unklarer Zuverlässigkeit ihrer Daten vorhanden - oft ist unklar, auf welcher Datenbasis sie beruhen und ob es sich um Mess- oder um Schätzwerte handelt. Teilweise kann es sich um Standardlastprofile handeln, die typische Verbrauchsmuster einer großen Anzahl von Verbrauchern widerspiegeln. Mit anderen Worten, es können keine Aussagen über die Qualität eines Lastprofils getroffen werden.

Es ist außerdem notwendig, dass das der Auslegung zugrunde zu legende Lastprofil möglichst nahe an der Betriebsrealität des Energiesystems während dessen Lebensdauer liegt. Andernfalls besteht die Gefahr einer nicht ausreichenden Energieversorgung und dadurch notwendigen Nachrüstungen, und/oder die Gefahr, dass das Energiesystem mit einem ungünstigen Wirkungsgrad und hohem Schadstoffausstoß, beispielsweise CO₂-Ausstoß, arbeitet. Eine Abschätzung, wie gut ein Lastprofil mit der angenommenen Betriebsrealität übereinstimmt, d.h. wie passend es ist, ist oft schwierig, weil die dafür notwendigen Informationen zu dem Lastprofil fehlen.

Die Entscheidung, welches Lastprofil als Grundlage für das geplante Energiesystem herangezogen wird, wird in der Regel von Experten getroffen, die die Auswahl mehr oder weniger intuitiv treffen. Ein objektives, insbesondere quantifiziertes, Kriterium ist für die Auswahl nicht vorhanden.

Der Erfindung liegt das Problem zugrunde, ein Verfahren zur Bestimmung eines Lastprofils anzugeben, das eine verbesserte Festlegung von Systemparametern für ein Energiesystem ermöglicht. Das auf Basis das Verfahrens hergestellte Energiesystem soll technisch besser arbeiten, insbesondere mit verringertem Primärenergiebedarf und Schadstoffausstoff und mit verbessertem Wirkungsgrad.

Diese Aufgabe wird gelöst durch ein Verfahren mit den Merkmalen des Patentanspruchs 1 und durch eine Anordnung gemäß Patentanspruch 17.

Die Erfindung beruht auf einer Qualitätsbewertung von Lastprofilen. Es ist eine Datenbank mit Datensätzen vorgesehen, wobei ein Datensatz ein Lastprofil mit zugehörigen Metadaten umfasst. Zu einem Datensatz wird ein Bewertungsfaktor Qᵢ zugeordnet, der die Qualität des Datensatzes widerspiegelt. Unter den Begriff Qualität werden Aspekte der Zuverlässigkeit bzw. Konsistenz der Datenbasis und/oder Glaubwürdigkeit und/oder Vollständigkeit der Daten gefasst. Für das zu erstellende Energiesystem liegen ein oder mehrere Anforderungsdaten vor, diese Anforderungsdaten beziehen sich auf Eigenschaften, die zumindest teilweise in den Metadaten der gespeicherten Lastprofile (oder zumindest eines gespeicherten Lastprofils) erfasst sind.

Das Verfahren sieht weiter vor, mindestens einen Datensatz der Datenbank auszuwählen, wobei die Auswahl anhand eines Vergleichs der Metadaten und anhand des Bewertungsfaktors getroffen wird. Mit anderen Worten, es wird ein ausreichend passendes und gleichzeitig qualitativ ausreichendes Lastprofil ausgewählt. Unter Verwendung des mindestens einen ausgewählten Lastprofils werden Systemparameter des Energiesystems bestimmt.

Metadaten können beispielsweise folgende Größen sein:
- Zeitliche Angaben wie Datum und Uhrzeit
- Geografische Position
- Art des oder der Verbraucher, wie z.B. Industriebranche, öffentliches Gebäude (ggf. mit Unterkategorien Verwaltungsbau, Schule, Schwimmbad, Bahnhof, Flughafen...), privater Haushalt (ggf. mit Unterkategorien Ein- oder Mehrfamilienhaus)
- Granularitätsstufe der Daten (beispielsweise ob es sich um den Lastgang der gesamten Anlage handelt oder nun um den Lastgang eines Teilprozesses)
- Errichtungsjahr
- Hersteller bzw. Errichter
- Energiestandard des Gebäudes
- verbaute Energiekomponenten
- Zeitpunkt und Art von Betriebsstörungen
- Wetterdaten während der Erfassung des Lastprofils
- Daten zu Konjunktur, Verkehrsaufkommen oder anderen Wirtschaftsdaten (beispielsweise Produktionsleistung des Industriebetriebs oder Anzahl Besucher von öffentlichen Gebäuden), Energiepreisen, Rohstoffpreisen während der Erfassung des Lastprofils

Metadaten können lastspezifische Daten, also Angaben zu Verbrauchern sein (beispielsweise Industriebranche, Energiestandard von Gebäuden, geografische Position u.a.) oder allgemeine, d.h. nicht- lastspezifische Daten sein (beispielsweise Wetterdaten, Konjunkturdaten).

Die Datensätze, d.h. die Lastprofile und Metadaten, können aus Messreihen von in Betrieb befindlichen Energiesystemen bzw. ihrer angeschlossenen Verbraucher gewonnen sein, oder es kann sich um Planungsdaten aus anderen Auslegungsprojekten für Energiesysteme handeln. Die Lastprofile können auch sogenannte Standardlastprofile sein, bei diesen erfolgt keine individuelle Lastgangmessung, sondern sie beruhen auf einem kategoriespezifischen (insbesondere branchenspezifischen) Verbrauchsmuster einer für die statistische Aussagekraft hinreichend großen Anzahl von Verbrauchern. Diese verschiedenen Ausprägungen sind im Folgenden von den Begriffen Lastprofil und Datensatz umfasst.

Für den Vergleich der Anforderungsdaten mit den Metadaten wird vorzugsweise ein Ähnlichkeitsmaß zugrunde gelegt, insbesondere kann die mittlere quadratische Abweichung zwischen den Metadaten und den Anforderungsdaten bestimmt werden. Je kleiner dieser Wert ist, desto größer ist die Wahrscheinlichkeit, dass das zugehörige Lastprofil mit der Betriebsrealität des auszulegenden Energiesystems übereinstimmt. Für die Auswahl kann festgelegt sein, dass das Ähnlichkeitsmaß einen bestimmten Schwellwert unter- oder überschreitet (je nach Definition des Ähnlichkeitsmaßes), so dass sichergestellt ist, dass ein ausreichend passendes Lastprofil ausgewählt wird.

Als weiteres Kriterium fließt mindestens ein Bewertungsfaktor Qᵢ für den Datensatz in die Auswahl ein, wodurch ein qualitativ ausreichendes, d.h. ausreichend gutes Lastprofil gewährleistet ist. Zur Ermittlung der Bewertungsfaktoren Qᵢ kann insbesondere der Datensatz selbst analysiert werden, beispielsweise hinsichtlich der Anzahl bzw. Vollständigkeit zugeordneter Metadaten oder auf Vorliegen von Autokorrelation oder fehlenden Messpunkten im Lastprofil. Alternativ oder zusätzlich kann eine Analyse durch Vergleich des Lastprofils mit gespeicherten, vorzugsweise ähnlichen und/oder branchenspezifischen Lastprofilen, durchgeführt werden. Dabei können bestimmte Kenngrößen wie maximale Last oder Lastverteilung (Metriken) verglichen werden, und/oder es kann auf Korrelation mit den gespeicherten Lastprofilen geprüft werden.

Wenn mehrere der Bewertungsmethoden durchgeführt werden, kann ein Gesamtbewertungsfaktor Q aus den einzelnen Bewertungsfaktoren Qᵢ bestimmt werden, beispielsweise durch Multiplikation.

Es liegt im Rahmen der Erfindung, sukzessive weitere Datensätze in der Datenbank zu speichern. Es kann dann zum einen für diese neuen Datensätze ebenfalls eine Qualitätsbewertung durchgeführt und ein Bewertungsfaktor zugeordnet werden. Zum anderen kann mit der vergrößerten Datenbasis eine Neuberechnung der Bewertungsfaktoren der schon bewerteten Datensätze durchgeführt werden, wodurch die Bewertung zuverlässiger wird.

Ein weiterer Datensatz kann dadurch gewonnen werden, dass nach Errichtung des geplanten Energiesystems in dessen Betrieb Messdaten in Form eines Lastprofils gewonnen werden und mit zugeordneten Metadaten als weiterer Datensatz gespeichert werden.

In einer Ausführungsform ist vorgesehen, ein Lastprofil mit teilweise fehlerhaften Messpunkten zu korrigieren, indem die fehlerhaften Messpunkte durch - ggf. weiter angepasste - Messpunkte eines anderen Lastprofils ersetzt werden. Dazu wird als das andere Lastprofil ein Lastprofil ausgewählt, das möglichst ähnlich ist und/oder einen hohen Bewertungsfaktor aufweist, ggf. kann das ausgewählte andere Lastprofil beispielsweise durch Skalierung angepasst werden.

Das Verfahren wird vorzugsweise mit einem Computerprogramm durchgeführt. Wenn der Programmcode durch einen Prozessor ausgeführt wird, werden die beschriebenen Schritte ausgeführt. Das Programm weist eine Schnittstelle zu einer Datenbank auf, in der Datensätze umfassend Lastprofile und Metadaten gespeichert sind.

Die Erfindung wird im Folgenden anhand von Ausführungsbeispielen, die in den Figuren schematisch dargestellt sind, näher erläutert. Es zeigen:
Fig. 1: ein erstes Ausführungsbeispiel
Fig. 2: ein zweites Ausführungsbeispiel.

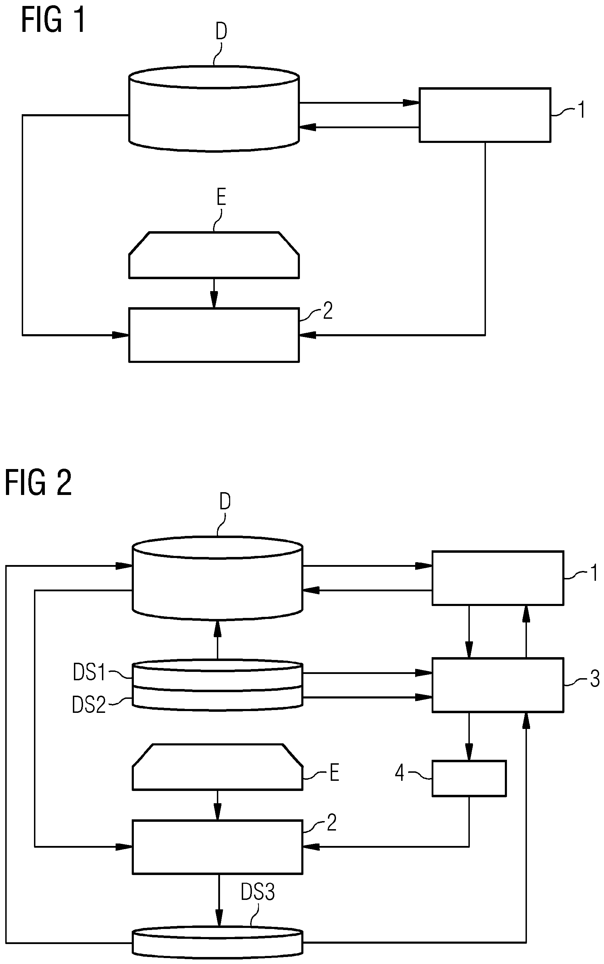

Fig. 1 zeigt schematisch eine Datenbank D, in der Datensätze gespeichert sind, wobei ein Datensatz ein Lastprofil mit zugeordneten Metadaten umfasst. In diesem Beispiel beruhen die Lastprofile auf Messungen des Strombedarfs eines Betriebs in bestimmten Branchen (vertikale Märkte) jeweils über einen bestimmten Zeitraum und mit einer bestimmten zeitlichen Auflösung. Weiter sind die Lastprofile gekennzeichnet durch Größe des Betriebs (z.B. Mitarbeiterzahl), Gebäudegröße, Errichtungsjahr, geografische Position, Wetterdaten, Branche und weitere. Diese Daten bilden die Metadaten eines Datensatzes, der Strombedarf in Abhängigkeit von der Zeit bildet das Lastprofil des Datensatzes.

Für die Datensätze wird in dem mit 1 gekennzeichneten Verfahrensschritt ein Bewertungsfaktor ermittelt, wobei eines oder mehrere der im Folgenden beschriebenen Bewertungsverfahren für die Qualität eines Datensatzes durchgeführt werden. Dabei ist es vorteilhaft, die jeweiligen Kriterien so zu verknüpfen und ggf. zu normieren, dass der berechnete Bewertungsfaktor Qᵢ (i= a, ...f) in einem vorgegebenen Intervall liegt, beispielsweise zwischen null und eins, wobei ein hoher Wert einer hohen Qualität entspricht:
a) Anzahl und/oder Vollständigkeit der gespeicherten Metadaten: Je mehr Informationen über das Lastprofil vorliegen, je mehr Metadaten also erfasst sind, desto höher ist der Bewertungsfaktor. Beispielsweise kann als Bewertungsfaktor Qₐ der Prozentsatz der befüllten Metadaten-Datenfelder des Datensatzes bestimmt werden.
b) Analyse des Verlaufs des Lastprofils: Prüfung auf sich wiederholende Abschnitte oder anderweitig korrelierende Abschnitte. Dies stellt oft einen Hinweis auf Duplizierung von Messpunkten dar anstelle tatsächlicher Messungen über den gesamten Zeitraum und ist negativ zu bewerten. Mithilfe einer Autokorrelationsfunktion kann das Fehlen bzw. das Ausmaß von Wiederholungen oder anderen Korrelationen festgestellt werden und als Bewertungsfaktor Q_{b} quantifiziert werden. Dies ermöglicht eine Aussage, ob bzw. mit welcher Wahrscheinlichkeit es sich um eine synthetische oder willkürliche Datenreihe handelt.
c) Vergleich mit branchenspezifischen Kenngrößen (Metriken) des Lastprofils, wie beispielsweise maximale Lastanforderung, Lastfaktor (d.h. der Quotient aus mittlerer Last und maximaler Last in einem bestimmten Zeitraum) und/oder Lastverteilung. Hierzu wird mithilfe der Metadaten eine Kategorisierung der bekannten Datensätze nach verschiedenen Branchen, insbesondere vertikalen Märkten, vorgenommen. Eine Kenngröße wie beispielsweise die maximale Last des zu bewertenden Lastprofils wird dann mit anderen Lastprofilen einer oder mehrerer passender Branchen verglichen. In die Berechnung eines Bewertungsfaktors Q_{c} kann die (normierte) Differenz zwischen beispielsweise branchenspezifischer maximaler Lastanforderung und der maximalen Lastanforderung des betrachteten Lastprofils in geeigneter Weise einfließen, wobei Q_{c} vorzugsweise so berechnet wird, dass der Wert umso höher ist, je geringer diese Differenz ist.
d) Vergleich mit Kenngrößen bekannter Datensätze. Es ist auch möglich, eine Bewertung vorzunehmen, wenn keine oder nicht ausreichende Metadaten für das zu bewertende Lastprofil vorhanden sind, um es einer bestimmten Branche zuzuordnen bzw. zu kategorisieren. Es werden dann Metriken (maximale Last, Basislast o.a.) des Lastprofils ermittelt, und danach wird die Zuordnung zu einer bestimmten Kategorie oder Branche vorgenommen. Dann kann ein Bewertungsfaktor Q_{d} wie unter c) beschrieben bestimmt werden.
e) Korrelation mit bekannten Lastprofilen: ein niedriger Bewertungsfaktor Qₑ wird zugeordnet, wenn das zu bewertende Lastprofil stark mit einem bekannten korreliert, beispielsweise proportionale Werte aufweist, da dies ein Hinweis auf ein Duplikat ist. Mit an sich bekannten statistischen Methoden kann der Bewertungsfaktor so berechnet werden, dass er den zusätzlichen Informationsgewinn und damit den Wert des zu bewertenden Lastprofils widerspiegelt.
   Ebenso wird ein niedriger Bewertungsfaktor Qₑ zugeordnet, wenn das Lastprofil keine typischen Muster aufweist, sondern den Anschein von willkürlichen oder zufälligen Daten hat. Dies lässt sich beispielsweise dann feststellen, wenn die Autokorrelation dem Muster von Rauschen entspricht oder sehr nahe an einer Stoßfunktion liegt. Es ist vorteilhaft, die für den Vergleich heranzuziehenden bekannten Lastprofile anhand ihrer Metadaten zu selektieren, um die Datenmenge zu reduzieren.
f) Ersteller: Es kann ein Bewertungsfaktor Q_{f} für den Ersteller des Datensatzes vergeben werden. Ersteller bezeichnet die Entität, die den Datensatz gemessen und/oder in die Datenbank gestellt hat, also beispielsweise ein Energieversorgungsunternehmen oder ein wissenschaftliches Institut. Wie auch bei den anderen Bewertungsfaktoren kann dieser im Datensatz als weiteres Metadatum gespeichert werden. Somit erhalten als besonders seriös einzustufende Ersteller einen höheren Bewertungsfaktor.

Überprüfung der Bewertungen: Nach Ermittlung eines Bewertungsfaktors, beispielsweise gemäß einer oder mehrerer der vorstehend genannten Methoden, kann eine Überprüfung des Resultats vorgenommen werden. Mit statistischen Methoden können die bekannten Datensätze und ebenso neu aufgenommene Datensätze in der Datenbank hinsichtlich ihrer Bewertung überprüft werden. Daraus können sich geänderte Bewertungsfaktoren ergeben. Es kann beispielsweise die Forecastable Component Analysis angewandt werden, mit der eine Dimensionsreduktion von multidimensionalen Zeitreihen erzielt werden kann. Das Verfahren berücksichtigt zeitliche Korrelationen der Ausgangszeitreihen und sucht nach einem mathematischen Unterraum (Variablentransformation) mit der höchsten Vorhersagbarkeit. Ein anderes anwendbares Verfahren ist die Principal Component Analysis.

Es ist vorteilhaft, die gemäß einem oder mehrerer der beschriebenen Bewertungsverfahren bestimmten Bewertungsfaktoren in dieser Weise zu überprüfen und ggf. anzupassen.

Wenn mehrere der Bewertungsmethoden durchgeführt werden, kann ein Gesamtbewertungsfaktor Q aus den einzelnen Bewertungsfaktoren Qᵢ bestimmt werden, beispielsweise durch Multiplikation.

In der Fig. 1 ist mit E ein geplantes Energiesystem bezeichnet, für das Anforderungsdaten bekannt sind. Die Anforderungsdaten betreffen insbesondere die Parameter, die in den Metadaten der Lastprofile erfasst sind. Beispielsweise bezeichnen sie die Branche, die das Energiesystem versorgen soll, die Anzahl und Größe der Betriebe und deren geografische Positionen.

In Schritt 2 wird der Datensatz ausgewählt, der für Bestimmung der Systemparameter des Energiesystems verwendet wird. Hierzu werden zum einen ein oder mehrere Metadaten der Datensätze mit den Anforderungsdaten verglichen, und es wird beispielsweise die mittlere quadratische Abweichung betrachtet. Für die mittlere quadratische Abweichung ist ein erster Schwellwert vorgegeben. Zum anderen wird der Bewertungsfaktor der Datensätze betrachtet, der in Schritt 1 ermittelt wurde. Für den Bewertungsfaktor ist ein zweiter Schwellwert vorgegeben. Es wird ein Datensatz ausgewählt, dessen Abweichung unter dem ersten Schwellwert und dessen Bewertungsfaktor über dem zweiten Schwellwert liegt. Falls mehrere Datensätze diese Bedingungen erfüllen, kann der erste und/oder der zweite Schwellwert im Sinne einer Verschärfung geändert werden.

Es können auch mehrere Datensätze ausgewählt und miteinander kombiniert werden; das ist beispielsweise dann sinnvoll, wenn die Datensätze Einzelprozesse (wie Schritte eines Herstellverfahrens) betreffen und durch Kombination, insbesondere Addition, ein Datensatz mit einem Lastprofil für den gesamten Prozess (beispielsweise das gesamte Herstellverfahren) erhalten wird.

Mithilfe des ausgewählten Lastprofils können Systemparameter des geplanten Energiesystems so festgelegt werden, dass ein verbesserter Wirkungsgrad erreicht wird. Ergibt sich beispielsweise aus dem Lastprofil ein hoher Energiebedarf zu bestimmten Tageszeiten, insbesondere mittags, kann das Energiesystem mit einer Photovoltaik-Anlage ausgerüstet werden, die ggf. um einen Batteriespeicher ergänzt wird, wobei die Kapazität des Speichers und die Größe der PV-Anlage mittels Energiesystemdesign durch ein mathematisches Optimierungsproblem bspw. kostenoptimal dimensioniert werden [vgl.: "Digitale Dekarbonisierung, Springer, 2021" und die Systemparameter festgelegt werden. Durch die auf den Bewertungsfaktor gestützte Auswahl des Lastprofils ist sichergestellt, dass dem Lastprofil eine zuverlässige Datenbasis zugrunde liegt.

Fig. 2 zeigt eine weitere Ausführungsform, bei der gegenüber der in Fig. 1 dargestellten vorgesehen ist, die Datenbank D sukzessive um weitere Datensätze DS1, DS2 zu erweitern. Für die weiteren Datensätze DS1, DS2 wird in Schritt 3 ein Bewertungsfaktor ermittelt mit einem oder mehreren der beschriebenen Verfahren. Auch für die bereits bewerteten Datensätze werden erneut Bewertungsfaktoren ermittelt, die - wenn das Bewertungsverfahren einen Vergleich auch mit den neuen Datensätze umfasst - aufgrund der vergrößerten Datenbasis genauer bzw. zuverlässiger sind.

Es ist außerdem vorgesehen, nach Errichtung des Energiesystems in dessen Betrieb Messdaten zu gewinnen, also insbesondere einen neuen Datensatz DS3 mit einem Lastprofil und zugeordneten Metadaten. Dieser Datensatz DS3 wird dann ebenfalls in der Datenbank D gespeichert. Er kann auch ein Bewertungsverfahren 1, 3 durchlaufen wie oben erläutert.

Ferner ist vorgesehen, im Schritt 4 die Qualität einzelner Lastprofile zu steigern, indem eine Änderung bzw. Korrektur an ihnen vorgenommen wird. Beispielsweise können Fehler durch Störungen beim Erfassen des Lastprofils aufgetreten sein, die zu einzelnen fehlerhaften Messpunkten (Ausreißer) oder Lücken in der Messreihe führen. Im Schritt 4 werden Fehler und fehlerhafte Lastprofile bzw. Datensätze identifiziert, indem u.a. eine Prüfung auf sich wiederholende Werte, auf Ausreißer und auf fehlende Messwerte oder insbesondere wiederholte Nullwerte erfolgt. In Schritt 4 wird auch ein Korrekturverfahren durchgeführt. Fehlerhafte Abschnitte in einem Lastprofil können durch Interpolation korrigiert werden, oder durch Werte aus einem anderen Lastprofil ersetzt werden. Dafür wird vorzugsweise ein anderes Lastprofil verwendet, das ein hohes Ähnlichkeitsmaß aufweist und/oder derselben Kategorie oder Branche angehört und/oder einen hohen Bewertungsfaktor aufweist. Es können auch mehrere andere Lastprofile kombiniert werden. Es kann eine statistische Methode, insbesondere eine sogenannte Hauptkomponentenanalyse (Principal Component Analysis) angewandt werden, um kondensierte Komponenten (bzgl. einer Variablentransformation) zu identifizieren und durch Auswahl geeigneter Komponenten/Cluster eine Extrapolation von historisch identifizierten Zusammenhängen auf neue Anwendungsfälle zu verbessern.

Die in den Ausführungsbeispielen beschriebenen Merkmale und Aspekte der Erfindung können selbstverständlich miteinander in unterschiedlicher Weise kombiniert werden. Insbesondere können die Merkmale nicht nur in den beschriebenen Kombinationen, sondern auch in anderen Kombinationen oder für sich genommen verwendet werden.

Mit der Erfindung kann automatisch das für ein auszulegendes Energiesystem beste, nämlich ausreichend passende und ausreichend gute, Lastprofil ermittelt werden. Durch Verwendung des erfindungsgemäß ausgewählten Lastprofils können die Systemparameter für das Energiesystem so bestimmt werden, dass das Energiesystem im Betrieb mit hoher Effizienz, hohem Wirkungsgrad und verringertem Schadstoffausstoß arbeitet. Durch sukzessive Vergrößerung der Datenbasis wird die Anpassung weiter verbessert.

## Patentansprüche

1. Verfahren zur Bestimmung von Systemparametern eines Energiesystems, wobei für das Energiesystem Anforderungsdaten vorhanden sind, unter Verwendung einer Datenbank D mit mindestens einem Datensatz, wobei der Datensatz ein Lastprofil mit zugehörigen Metadaten umfasst, mit folgenden Schritten
- Zuordnen eines Bewertungsfaktors Qᵢ zu einem Datensatz DS*ᵢ*,
- Auswahl mindestens eines Datensatzes anhand eines Vergleichs der Metadaten seines Lastprofils mit den Anforderungsdaten und anhand seines zugeordneten Bewertungsfaktors
- Bestimmen von Systemparametern des Energiesystems unter Verwendung des mindestens einen ausgewählten Datensatzes.

2. Verfahren nach Anspruch 1, **dadurch gekennzeichnet, dass** für die Auswahl ein Ähnlichkeitsmaß zwischen den Anforderungsdaten und den Metadaten bestimmt wird und mit einem ersten Schwellwert verglichen wird.

3. Verfahren nach einem der vorhergehenden Ansprüche, **dadurch gekennzeichnet, dass** für die Auswahl der zugeordnete Bewertungsfaktor mit einem zweiten Schwellwert verglichen wird.

4. Verfahren nach einem der vorhergehenden Ansprüche, **dadurch gekennzeichnet, dass** für die Bestimmung des Bewertungsfaktors Qᵢ des Datensatzes die absolute oder prozentuale Anzahl zugeordneter Metadaten verwendet wird.

5. Verfahren nach einem der vorhergehenden Ansprüche, **dadurch gekennzeichnet, dass** für die Bestimmung des Bewertungsfaktors Qᵢ des Datensatzes das Lastprofil abschnittsweise auf seine Autokorrelation geprüft wird und der Bewertungsfaktor die Autokorrelation angibt.

6. Verfahren nach einem der vorhergehenden Ansprüche, **dadurch gekennzeichnet, dass** für die Bestimmung des Bewertungsfaktors Qᵢ des Datensatzes eine Kenngröße des Lastprofils mit derjenigen mindestens eines anderen gespeicherten Lastprofils verglichen wird.

7. Verfahren nach einem der vorhergehenden Ansprüche, **dadurch gekennzeichnet, dass** für die Bestimmung des Bewertungsfaktors Qᵢ des Datensatzes eine Kenngröße des Lastprofils mit derjenigen mindestens eines anderen gespeicherten Lastprofils verglichen wird, wobei das andere Lastprofil anhand seiner Metadaten ausgewählt wird.

8. Verfahren nach einem der vorhergehenden Ansprüche, **dadurch gekennzeichnet, dass** für die Bestimmung des Bewertungsfaktors Qᵢ des Datensatzes das Lastprofil abschnittsweise auf Korrelation mit einem anderen Lastprofil geprüft wird und der Bewertungsfaktor die Korrelation wiedergibt

9. Verfahren nach einem der vorhergehenden Ansprüche, **dadurch gekennzeichnet, dass** für die Bestimmung des Bewertungsfaktors Qᵢ eine Bewertung für den Ersteller des Datensatzes oder des Lastprofils verwendet wird.

10. Verfahren nach einem der vorhergehenden Ansprüche, **dadurch gekennzeichnet, dass** nach Ermittlung des Bewertungsfaktors dieser mit einer statistischen Methode überprüft und ggf. geändert wird.

11. Verfahren nach einem der vorhergehenden Ansprüche, **dadurch gekennzeichnet, dass** für die Bestimmung des Bewertungsfaktors Qᵢ ein Vergleich mit mindestens einem Standard-Lastprofil durchgeführt wird.

12. Verfahren nach einem der vorhergehenden Ansprüche, **dadurch gekennzeichnet, dass** mehrere Bewertungsfaktoren mit sich unterscheidenden Methoden ermittelt werden und aus diesen ein Gesamtbewertungsfaktor bestimmt wird.

13. Verfahren nach einem der vorhergehenden Ansprüche, **dadurch gekennzeichnet, dass** das Lastprofil auf Fehler geprüft wird und ggf. korrigiert wird.

14. Verfahren nach einem der vorhergehenden Ansprüche, **dadurch gekennzeichnet, dass** die Datenbank um weitere Datensätze (DS1, DS2, DS3) ergänzt wird und eine erneute Bestimmung des Bewertungsfaktors und ggf. des Gesamtbewertungsfaktors des Datensatzes durchgeführt wird.

15. Verfahren nach einem der vorhergehenden Ansprüche, **dadurch gekennzeichnet, dass** für die Bestimmung der Systemparameter mehrere Lastprofile kombiniert werden.

16. Verfahren nach einem der vorhergehenden Ansprüche, **dadurch gekennzeichnet, dass** als Metadaten lastspezifische Daten und/oder nicht-lastspezifische Daten gespeichert sind

17. Vorrichtung oder System zur Datenverarbeitung, umfassend Mittel zur Ausführung des Verfahrens nach einem der Ansprüche 1 bis 16.

18. Computerprogrammprodukt, umfassend Befehle, die bei der Ausführung des Programms durch einen Computer diesen veranlassen, ein Verfahren nach einem der vorhergehenden Ansprüche auszuführen.
